## Europäisches Patentamt
## European Patent Office
## Office européen des brevets

(19)

(11) Publication number: **0 038 089**
**B1**

(12) 

# EUROPEAN PATENT SPECIFICATION

(45) Date of publication of patent specification: **09.05.84**   (51) Int. Cl.³: **E 02 B 15/04**

(21) Application number: **81200267.3**

(22) Date of filing: **10.03.81**

(54) Apparatus for removing a pollutant from the surface of a water body.

(30) Priority: **31.03.80 US 135826**

(43) Date of publication of application:
**21.10.81 Bulletin 81/42**

(45) Publication of the grant of the patent:
**09.05.84 Bulletin 84/19**

(84) Designated Contracting States:
**DE FR GB NL SE**

(56) References cited:
**FR - A - 1 305 540**
**FR - A - 2 095 575**
**FR - A - 2 170 433**
**US - A - 3 534 858**
**US - A - 3 534 859**
**US - A - 3 707 232**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Ward, John Michael**
**22734 Merrymount Drive**
**Katy Texas 77450 (US)**
Inventor: **Demny, Florian Christopher**
**1919 Preston Road**
**Pasadena Texas 77503 (US)**

(74) Representative: **Puister, Antonius Tonnis, Mr. et al,**
**P.O. Box 302**
**NL-2501 CH The Hague (NL)**

Courier Press, Leamington Spa, England.

# Description

The present invention relates to an apparatus for removing a pollutant from the surface of a water body, comprising protruding weir adapted to skim a surface layer of the pollutant, a flotation means for floating the said weir, the said flotation means being placed below the said weir and extending downwardly from the said weir, a flexible member suspended above the said weir and the said flotation means and above the still water line, means for applying suction to the said weir, and means for transporting pollutant from the said weir to pollutant collection means.

Such an apparatus is known from French patent specification 2,170,433. However, this known apparatus comprises at least two flotation means. The weir is provided with a downwardly extending flotation cone and the flexible member comprises a membrane and a peripheral rigid tubular flotation construction serving as an edge surface contacting the water. This leads to a complicated and vulnerable structure, which does not allow good conformance to waves and the removal of the pollutant from the water surface will not always take place in an efficient manner; in particular, rough water may cause difficulties due to lack of flexibility. Further U.S. patent specification No. 3,707,232 describes an inefficient oil skimmer wherein the separation of oil from water is minimal because of the steep slope of a cone forming part of the skimmer. Moreover, air entrainment occurs on all but the most calm water because of the rigid nature of this known skimmer. U.S. patent specification No. 4,049,554 provides an inefficient skimming device being only suitable for use in calm water with relatively thick oil layers in view of the limited flexibility floating pad used in this skimmer. From US—A—3,534,859 a funnel-shaped weir as such is known. However, the structure of the apparatus according to said US—A—3,534,859 is fundamentally different from the present invention.

The object of the present invention is to provide a simple and continuously flexible apparatus for removing a pollutant such as oil from the surface of a water body which can operate in an efficient manner even in rough water and allows an excellent conformance to waves.

Therefore, the apparatus according to the invention is characterized in that the said weir is a funnel-shaped weir, that the said flexible member is substantially flat and is held up by a central reinforcing plate attached in the mouth of the said funnel-shaped weir, and that the said flexible member drapes downwardly from its centre in such a way that the edge surface of the flexible member contacts directly the surface of the water body, spaced from the circumference of the said weir and the said flotation means.

By employing the apparatus according to the invention a high volume of mainly oil with little water and no air can be collected.

The flexible member may be made of a layer of any flexible buoyant material having a thickness of 0.3 to 0.65 centimetres. According to a suitable embodiment of the present invention the flexible member is made of a layer of sponge neoprene having a thickness of 0.3 to 0.65 centimetres. The centre of the flexible member may be suspended 2.5 to 10 centimetres above the still water line and may be positioned relative to the weir such that there is an annular opening of 0.65 to 2 centimetres between the flexible member and the weir. The flexible member drapes downwardly from its raised centre to form an air-tight seal against the water surface.

In a typical application one or more apparatus according to the invention are deployed to remove oil accumulated in the apex of an oil spill containment boom.

The present invention will now be described by way of example in more detail with reference to the accompanying drawings wherein

Figure 1 is a cross section of an apparatus according to the invention, and

Figures 2 and 3 disclose two embodiments of deployment schemes using the apparatus according to the invention.

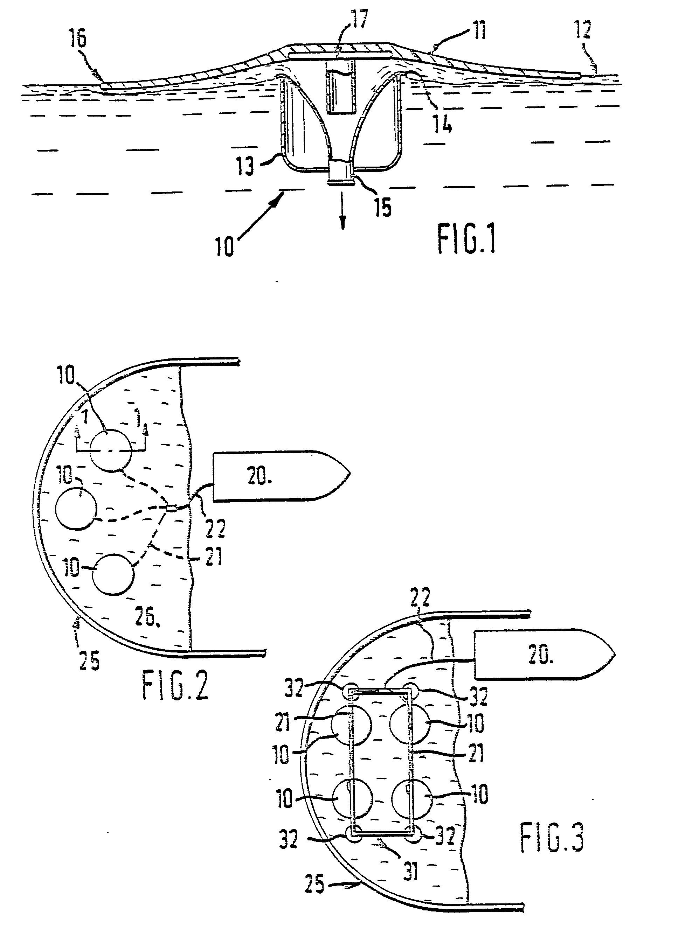

As shown in Figure 1 a skimmer 10 includes a substantially flat flexible member in the form of a disk 11 for example fabricated of a bouyant material such as closed-cell sponge neoprene or similar oil-resistant material. The disk 11 suitably has a thickness of from about 0.3 to about 0.65 centimetres. The centre of the disk 11 is raised above the still water line 12 by a flotation device 13 placed below a weir 14. Neither the weir 14, nor the flexible member 11 need be circular inasmuch as other shapes, for example oval or square, may be suitable for use with the invention. It is generally important that the weir be of a generally funnel-like shape to provide a suction connection 15 at the bottom thereof for removal of pollutant to a boat or barge 20 as shown in Figures 2 and 3. The edge 16 of the disk 11 seals against the water which is important since it provides a pocket which oil migrates to by gravitational action and which facilitates the use of suction via the suction connection 15. This sealing effect, coupled with the disk's low density, high flexibility and large waterplane area, allows the disk to follow the surface contours of waves, thereby preventing performance degrading wave reflections and air entrainment. Oil flows up the gentle slope of the disk by gravity forces while the water, being heavier than the oil, moves downwardly. A relatively thick oil layer then accumulates at the peak of the disk which is held up by a reinforcing plate 17 attached in the mouth of the weir 14 by suitable supports (not shown).

As shown in Figures 2 and 3, skimmers 10 of the type as shown in Figure 1, are held in position by submerged suction hoses 21 and connected to a boat or barge 20 by a floating hose 22. A boom 25 collects oil 26 therewithin for removal by the skimmers to the boat or barge 20.

Another skimming arrangement is shown in Figure 3 in which skimmers 10 of the type as shown in Figure 1, are connected via a floating framework 31 supported by flotation means 32. Hoses 21 and 22, boom 25 and boat 20 serve the same functions as in the arrangement of Figure 2.

## Claims

1. An apparatus for removing a pollutant from the surface of a water body, comprising a protruding weir adapted to skim a surface layer of the pollutant, a flotation means for floating the said weir, the said flotation means being placed below the said weir and extending downwardly from the said weir, a flexible member suspended above the said weir and the said flotation means and above the still water line, means for applying suction to the said weir, and means for transporting pollutant from the said weir to pollutant collection means, characterized in that the said weir is a funnel-shaped weir, that the said flexible member is substantially flat and is held up by a central reinforcing plate attached in the mouth of the said funnel-shaped weir, and that the said flexible member drapes downwardly from its centre in such a way that the edge surface of the flexible member contacts directly the surface of the water body, spaced from the circumference of the said weir and the said flotation means.

2. The apparatus as claimed in claim 1, characterized in that the said flexible member is made of a layer of sponge neoprene having a thickness of 0.3 to 0.65 centimetres.

3. The apparatus as claimed in claim 1, characterized in that the said flexible member is made of a layer of any flexible bouyant material, having a thickness of 0.3 to 0.65 centimetres.

4. The apparatus as claimed in any one of claims 1 to 3, characterized in that the centre of the said flexible member is suspended 2.5 to 10 centimetres above the still water line and 0.65 to 2 centimetres above the said weir.

## Revendications

1. Un appareil pour enlever un pollutant de la surface d'une masse d'eau, comprenant un déversoir en saillie prévu pour écrémer une couche superficielle du polluant, un moyen de flottement pour faire flotter ce déversoir, ce moyen de flottement étant placé au-dessous du déversoir et s'étendant vers le bas à partir du déversoir, un élément flexible suspendu au-dessus de déversoir et du moyen de flottement et audessus du niveau de l'eau au repos, des moyens pour appliquer une aspiration au déversoir et des moyens pour transporter le polluant du déversoir à des moyens de recueil du polluant, caractérisé en ce que le déversoir est en forme d'entonnoir, que l'élément flexible est sensiblement plat et est soutenu par une plaque centrale de renforcement attachée à la bouche de déversoir en forme d'entonnoir et que l'élément flexible se drape vers le bas à partir de son centre de manière que la surface du bord de l'élément flexible soit en contact direct avec la surface de la masse d'eau, à une certaine distance de la circonférence du déversoir et du moyen de flottement.

2. L'appareil selon la revendication 1, caractérisé en ce que l'élément flexible est formé d'une couche de néoprène spongieux ayant une épaisseur de 0,3 à 0,65 centimètre.

3. L'appareil selon la revendication 1, caractérisé en ce que l'élément flexible est formé d'une couche de n'importe quelle matière flottante flexible, ayant une épaisseur de 0,3 à 0,65 centimètre.

4. L'appareil selon l'une quelconque des revendications 1 à 3, caractérisé en ce que le centre de l'élément flexible est suspendu 2,5 à 10 centimètres au-dessus du niveau de l'eau au repos et 0,65 à 2 centimètres audessus du déversoir.

## Patentansprüche

1. Vorrichtung zur Entfernung von Verunreinigungen von der Oberfläche eines Wasservolumens aus einem überstehenden Damm oder Wehr zum Abziehen einer Oberflächenschicht von Verunreinigungen, eine Schwimmvorrichtung für das Aufschwimmen des Damms, wobei die Schwimmvorrichtung sich unterhalb des Damms befindet und sich von diesem nach unten erstreckt einen flexiblen Teil hängend über dem Damm und der Schwimmvorrichtung und über dem Wasserniveau, Mittel zum Absaugen von dem Damm sowie Mittel zum Transport der Verunreinigungen, von dem Damm zu einer Sammelsteile für die Verunreinigungen dadurch gekennzeichnet, daß der Damm ein kanalförmiger Damm ist und Daß das flexible Teil im wesentlichen eben ist und durch eine zentrale Verstärkungsplatte gehalten wird, welche in der Öffnung des kanalförmigen Damms befestigt ist und daß das flexible Teil von dessen Mitte in einer solchen Weise nach unten hängt, daß die Kantenfläche des flexiblen Teils direkt die Oberfläche des Wasservolumens berührt, im Abstand vom Umfang des Damms und der Schwimmvorrichtung.

2. Vorrichtung nach Anspruch 1, dadurch gekennzeichnet, daß das flexible Teil aus einer Schicht eines Neoprenschwamms mit einer Stärke von 3 bis 6,5 mm gebildet ist.

3. Vorrichtung nach Anspruch 1, dadurch gekennzeichnet, daß das flexible Teil aus einer Schicht eines beliebigen biegsamen auftreibenden Materials einer Stärke von 3 bis 6,5 mm gebildet wird.

4. Vorrichtung nach einem der Ansprüche 1 bis 3, dadurch gekennzeichnet, daß die Mitte des flexiblen Teils 25 bis 100 mm über dem Niveau des ruhigen Wassers und 6,5 bis 20 mm über dem Damm aufgehängt ist.

FIG.1

FIG.2

FIG.3